# EUROPÄISCHE PATENTSCHRIFT

(11) **EP 0 845 485 B1**
(45) Veröffentlichungstag und Bekanntmachung des Hinweises auf die Patenterteilung: **03.11.2004**
(21) Anmeldenummer: 97120331.0
(22) Anmeldetag: 20.11.1997
(51) Int. Cl.: C08G 18/48

(54) **Weichelastische Polyurethanschaumstoffe und ein Verfahren zu deren Herstellung**
Flexible polyurethane foams and a process for their preparation
Mousses de polyuréthane souples et élastiques et leur procédé de préparation

(30) Priorität: 02.12.1996 DE 19649829
(43) Veröffentlichungstag der Anmeldung: 03.06.1998
(73) Patentinhaber: Bayer MaterialScience AG, 51368 Leverkusen (DE)
(72) Erfinder: Jacobs, Gundolf, Dr., 51503 Rösrath (DE); Haas, Peter, Dr., 42781 Haan (DE)

(56) Entgegenhaltungen:
- EP-A- 0 379 008
- EP-A- 0 554 721
- US-A- 4 008 189
- US-A- 5 063 253

## Beschreibung

Als weichelastische Schaumstoffe finden im Prinzip zwei große Produktgruppen technische Anwendung. Dies sind zum einen die weichelastischen Polyurethanschaumstoffe und zum andern die Latexschaumstoffe, welche vom Nutzungsprofil ähnlich sind.

Beispielsweise offenbaren EP-A 0 379 008 und EP-A 0 554 721 weichelastische PU-Schaumstoffe, zu deren Herstellung jeweils ein Gemisch von drei Polyolen eingesetzt wird.

Gleichwohl existieren zwischen beiden Gruppen Unterschiede in der Herstellung, den Ausgangspunkten sowie den mechanischen Eigenschaften.

So ist für Latexschaumstoffe ein etwas anderer Verlauf der Stauchhärtekurve nach DIN 53 577 bzw. ISO 3386, Teil 1 und 2, gegeben. Hier zeigen die Latexschaumstoffe kein ausgeprägtes Stauchhärteplateau, sondern vielmehr einen fortlaufenden Anstieg der Stauchhärte bei zunehmender Stauchung im Vergleich mit Polyurethanschaumstoffen.

Für bestimmte Anwendungen ist nun gerade diese Charakteristik erwünscht.

Technische Aufgabe war es also, den Stauchhärte/Stauchungsverlauf in Polyurethanschaumstoffen so zu beeinflussen, dass ein Latex-ähnliches oder gar Latex-gleiches Verhalten resultiert und die Härte in mittleren Bereichen der Stauchhärte zwischen 2,5 und 4,0 kPa liegen soll.

Es wurde nun gefunden, dass durch Polyolkomponenten unterschiedlicher Funktionalität, d.h. bi- und höherfunktioneller Polyetherpolyole mit unterschiedlichem Ketten aufbau ein solcher Kurvenverlauf eingestellt werden kann, ohne dass die Werte für eine bleibende Verformung ansteigen und gleichzeitig mittlere Härtebereiche bei höheren Rohdichten vorliegen.

Gegenstand der vorliegenden Anmeldung ist daher ein Verfahren zur Herstellung von weichelastischen Polyurethanschaumstoffen durch Umsetzung von
A) Polyisocyanaten oder Polyisocyanatprepolymeren mit
B) Polyetherpolyolen
C) Wasser
D) gegebenenfalls Treibmitteln
E) Aktivatoren, Stabilisatoren sowie weiteren an sich bekannten Zusatzstoffen,
dadurch gekennzeichnet, dass als Polyetherpolyole B
i) mindestens ein Polyetherpolyol der Funktionalität 2,5 bis 6, bevorzugt 2,8 bis 4,0 mit mindestens 75 Gew.-% Propylenoxidanteil in der EO/PO-Kette
ii) mindestens ein Polyetherpolyol der Funktionalität 1,8 bis 2,3, bevorzugt 1,9 bis 2,3 mit mindestens 75 Gew.-% Propylenoxidanteil in der EO/PO-Kette
iii) mindestens ein Polyetherpolyol der Funktionalität 2 bis 6, bevorzugt 2,5 bis 4,0, mit einem Ethylenoxid-Gehalt von mindestens 50 Gew.-%, bevorzugt 60 bis 90 % in der EO/PO-Kette
verwendet wird, wobei
i) in Mengen von mindestens 15 %,
ii) in Mengen von 30 - 80 %,
iii) in Mengen von 3 - 15 %, bezogen auf 100 % der Polyolkomponente B eingesetzt wird.

Gegebenenfalls können alle an sich gebräuchlichen Treibmittel wie Hydrofluoralkane oder Alkane wie z.B. Pentan, i-Pentan oder Cyclopentan, oder auch flüssiges Kohlendioxid eingesetzt werden.

Überraschend wurde nämlich gefunden, dass durch die erfindungsgemäße Polyetherkombination der gewünschte Verlauf der Stauchung wie beim Latexschaum erreicht wird, ohne dass durch die Linearanteile ein Anstieg Druckverformung bewirkt wird.

Die verwendete Polyolkomponente i) liegt im Bereich von 15 bis 70 %, ii) im Bereich von 30 bis 80 % und iii) im Bereich von 3 bis 15 %, bezogen auf 100 Teile Polyolkomponente B.

Ausgangsmaterialien auf der Seite der Isocyanate sind bevorzugt aromatische Polyisocyanate wie Toluylendiisocyanat und Diphenylmethandiisocyanat, deren Gemische oder ihre Prepolymere, wobei die Isocyanate durch Urethan-, Harnstoff-, Biuret-, Allophanat-, Carbodiimid- oder Uretdion-Gruppen modifiziert sein können.

Durch die erfindungsgemäße Polyol-seitige Kombination lassen sich überraschend gut folgende Ziele zusammen erreichen:
linearer Anstieg der Stauchhärte,
hohe Rohdichte,
geringe Stauchhärte,
geringe Druckverformung,
geringe Feuchtalterung und
hohe Offenzelligkeit,
da sie bei Schaumstoff nach dem bisher bekannten Stand der Technik oft entgegengesetzt verlaufen.

Ausgangsmaterialien auf der Seite der Polyole sind Ether- oder Esterpolyole, wie sie bekanntlich durch Addition von Alkylenoxiden wie Ethylenoxid und/oder Propylenoxid an mehrfunktionelle Starter wie Ethylenglykol. Propylenglykol, Trimethylolpropan, Sorbit, Zucker, Ethylendiamin oder deren Gemische oder aber durch Kondensation von Dicarbonsäuren mit überwiegend bifunktionellen Hydroxykomponenten erhalten werden.

Als Schaumstabilisatoren E) kommen vor allem Polyethersiloxane, bevorzugt wasserunlösliche Vertreter, in Frage. Diese Verbindungen sind im allgemeinen so aufgebaut, daß ein kürzer kettiges Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 sowie US-PS 2 917 480 beschrieben.

Katalysatoren E) der an sich bekannten Art, sind z.B. tertiäre Amine, wie Triethylamin, Tributylamin, N-Methyl-morpholin, N-Ethyl-morpholin, N,N,N',N'-Tetramethyl-ethylendiamin, Pentamethyl-diethylentriamin und höhere Homologe (DE-A 2 624 527 und 2 624 528), 1,4-Diazabicyclo-(2,2,2)-octan, N-Methyl-N'dimethylaminoethylpiperazin, Bis-(dimethylaminoalkyl)-piperazine, N,N-Dimethylbenzylamin, N,N-Dimethylcyclohexylamin, N,N-Diethylbenzylamin, Bis-(N,N-diethylaminoethyl)-adipat, N,N,N',N'-Tetramethyl-1,3-butandiamin, N,N-Dimethyl-β-phenylethylamin, 1,2-Dimethylimidazol, 2-Methylimidazol, monocyclische und bicyclische Amidine sowie Bis-(dialkylamino)-alkyl-ether wie 2,2-Bis-(dimethylaminoethyl)-ether.

Als Katalysatoren E) können auch organische Metallverbindungen, insbesondere organische Zinnverbindungen, verwendet werden. Als organische Zinnverbindungen kommen neben schwefelhaltigen Verbindungen wie Di-n-octyl-zinnmercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Zusätzliche Beispiele von gegebenenfalls erfindungsgemäß mitzuverwendenden Komponenten E), weiteren Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und baktereostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1993, 3. Auflage, z.B. auf den Seiten 104 bis 127 beschrieben.

### Beispiele

### Polyol 1

Polyetherpolyol der OH-Zahl 46, hergestellt durch Addition von 10 Gew.-% Ethylenoxid und 90 Gew.-% Propylenoxid an ein Startergemisch aus 90 % Glycerin und 10 % Propylenglykol mit überwiegend sekundären OH-Gruppen.

### Polyol 2

Polyetherpolyol der OH-Zahl 56, hergestellt durch Addition von Propylenoxid an Propylenglykol.

### Polyol 3

Polyetherpolyol der OH-Zahl 36, hergestellt durch Addition von 70 Gew.-% Ethylenoxid und 30 Gew.-% Propylenoxid an Glycerin als Starter mit überwiegend primären OH-Gruppen.

### Polyol 4

Polyetherpolyol der OH-Zahl 28, hergestellt durch Addition von 85 Gew.-% Propylenoxid und 15 Gew.-% Ethylenoxid an Trimethylolpropan als Stárter mit überwiegend primären OH-Gruppen.

### Polyisocyanat 1

Gemisch aus 80 Gew.-% 2,4- und 20 Gew.-% 2,6-Toluylendiisocyanat.

### Polyisocyanat 2

Gemisch aus 65 Gew.-% 2,4- und 35 Gew.-% 2,6-Toluylendiisocyanat.

Herstellung der erfindungsgemäßen PUR-Weichschaumstoffe:

Für die zur Herstellung von Blockschaumstoffen üblichen Verfahrensweise auf einer UBT-Anlage der Fa. Hennecke, D-53754 Birlinghoven, mit dem Ausstoß 30 kg/min werden zur Reaktion gebracht:

### Beispiel 1:

| | |
|---|---|
| Polyol 1 (Komp. Bi) | 52 Gew.-Teile |
| Polyol 2 (Komp. Bii) | 40 Gew.-Teile |
| Polyol 3 (Komp. Biii) | 8 Gew.-Teile |
| Stabilisator OS 20 (Bayer AG) | 0,8 Gew.-Teile |
| Dimethylaminoethanol | 0,2 Gew.-Teile |
| Desmorapid PV (Bayer AG) | 0,1 Gew.-Teile |
| Zinn-2-ethylhexoat | 0,16 Gew.-Teile |
| Wasser | 2 Gew.-Teile |
| Isocyanat 1 | 29,1 Gew.-Teile |
| Index | 108 |
| Rohdichte (kg/m³) | 45 |
| Zugfestigkeit (kPa) | 98 |
| Bruchdehnung (%) | 200 |
| Stauchhärte 40 % (kPa) | 3,1 |
| Druckverformungsrest bei 90 % Kompression (%) | 1,8 |

Die Stauchhärtekurve nach DIN 53 577 zeigt nicht das übliche Plateau im Bereich von 5 bis 15 % Stauchung, sondern ein nahezu plateauloses, fortlaufendes Ansteigen der Stauchhärtekurve, entsprechend der bei Latexschaumstoffen.

### Beispiel 2:

| | |
|---|---|
| Polyol 1 (Komp. Bi) | 22 Gew.-Teite |
| Polyol 2 (Komp. Bii) | 70 Gew.-Teile |
| Polyol 3 (Komp. Biii) | 8,0 Gew.-Teile |
| Stabilisator OS 20 (Bayer AG) | 0,8 Gew.-Teile |
| Dimethylaminoethanol | 0,2 Gew.-Teile |
| Desmorapid PV | 0,1 Gew.-Teile |
| Zinn-2-ethylhexoat | 0,22 Gew.-Teile |
| Wasser | 2,0 Gew.-Teile |
| Isocyanat 1 | 14,8 Gew.-Teile |
| Isocyanat 2 | 14,8 Gew.-Teile |
| Index | 108 |
| Rohdichte (kg/m³) | 45 |
| Zugfestigkeit (kPa) | 128 |
| Bruchdehnung (%) | 420 |
| Stauchhärte 40 % (kPa) | 3,0 |
| Druckverformungsrest bei 90 % Kompression (%) | 3,6 |

Die Stauchhärtekurve nach DIN 53 577 zeigt für erfindungsgemäße PUR-Weichschaumstoffe nicht das bei PUR-Weichschaumstoffen übliche Plateau zwischen 5 bis 15 % Stauchung, sondern ein nahezu plateauloses, fortlaufendes Ansteigen der Stauchhärtekurve dem Latexschaum entsprechend.

### Beispiel 3:

| | |
|---|---|
| Polyol 4 (Komp. Bi) | 52 Gew.-Teile |
| Polyol 2 (Komp. Bii) | 40 Gew.-Teile |
| Polyol 3 (Komp. Biii) | 8 Gew.-Teile |
| Stabilisator OS 22 (Bayer AG) | 0,8 Gew.-Teile |
| Dimethylaminoethanol | 0,2 Gew.-Teile |
| Katalysator A1 (Air Products) | 0,1 Gew.-Teile |
| Zinn-2-ethylhexoat | 0,26 Gew.-Teile |
| Wasser | 2 Gew.-Teile |
| Isocyanat 1 | 13,8 Gew.-Teile |
| Isocyanat 2 | 13,8 Gew.-Teile |
| Index | 180 |
| Rohdichte (kg/m³) | 44 |
| Zugfestigkeit (kPa) | 120 |
| Bruchdehnung (%) | 390 |
| Stauchhärte (kPa) | 3,6 |
| Druckverformungsrest bei 90 % Kompression (5) | 2,5 |

Die Stauchhärte zeigt nicht das für PUR-Schaumstoffe übliche Plateau zwischen 5 % und 15 % Stauchung, sondern ein fortlaufendes Ansteigen der Stauchhärte nach DIn 53577.

Die erfindungsgemäß hergestellten Schaumstoffe zeigen in allen Bereichen eine gute Offenzelligkeit sowie eine mittlere Stauchhärte bei hoher Rohdichte. Der Druckverformungsrest bei 90 % Kompression ist sehr gering, die Werte für die Feuchtalterung liegen überraschend niedrig, obwohl die Schaumstoffe mit einer Härte von ca. 3 kPa (bei 40 % Kompression) als relativ weich einzustufen sind.

Aus diesen Gründen eignen sich diese Schaumstoffe als elastische Schaumstoffkomponente zur Herstellung hochwertiger Matratzen und Presiermaterialien, wie z.B. Federkernmatratzen und Taschenfederkernmatratzen.

## Patentansprüche

1. Verfahren zur Herstellung von weichelastischen Polyurethanschaumstoffen durch Umsetzung von
A) Polyisocyanaten oder Polyisocyanatprepolymeren mit
B) Polyetherpolyolen
C) Wasser
D) gegebenenfalls Treibmitteln
E) Aktivatoren, Stabilisatoren sowie weiteren an sich bekannten Zusatzstoffen,
**dadurch gekennzeichnet, dass** als Polyetherpolyole B)
i) mindestens ein Polyetherpolyol der Funktionalität 2,5 bis 6,0 mit mindestens 75 Gew.-% Propylenoxidanteil in der EO/PO-Kette,
ii) mindestens ein Polyetherpolyol der Funktionalität 1,8 bis 2,3 mit mindestens 75 Gew.-% Propylenoxidanteil in der EO/PO-Kette,
iii) mindestens ein Polyetherpolyol der Funktionalität 1,8 bis 6,0 mit einem Ethylenoxid-Gehalt von mindestens 50 % in der Polyether-Kette,
eingesetzt wird, wobei
i) in Mengen von mindestens 15 %,
ii) in Mengen von 30-80 %,
iii) in Mengen von 3 - 15 %, bezogen auf 100 % der Polyolkomponente B eingesetzt wird.

2. Verfahren nach Anspruch 1, **dadurch gekennzeichnet, dass**
i) ein Polyetherpolyol der Funktionalität 2,8 bis 4,0, mit einem Propylenoxidanteil in der EO/PO-Kette von mindestens 75 Gew.-%,
ii) ein Polyetherpolyol der Funktionalität 1,9 bis 2,3 mit einem Propylenoxidanteil in der EO/PO-Kette von mindestens 75 Gew.-%,
iii) ein Polyetherpolyol der Funktionalität 2,5 bis 3,5, mit einem Ethylenoxid-Gehalt von 60 - 90 Gew.-% in der EO/PO-Kette eingesetzt wird.

3. Verfahren gemäß einem der Ansprüche 1 bis 2, **dadurch gekennzeichnet, dass** als Polyisocyanat Toluylendiisocyanat verwendet wird.

4. Verfahren gemäß einem der Ansprüche 1 bis 3, **dadurch gekennzeichnet, dass** als Polyisocyanate oder Polyisocyanatprepolymere gegebenenfalls durch Urethan-, Harnstoff, Biuret-, Allophanat-, Carbodiimid- oder Uretdion-Gruppen modifiziertes Toluylendiisocyanat oder Diphenylmethandiisocyanat oder deren Prepolymere sowie deren Gemische eingesetzt werden.

5. Verfahren gemäß einem der Ansprüche 1 bis 4, **dadurch gekennzeichnet, dass** als Treibmittel flüssiges Kohlendioxid eingesetzt wird.

6. Weichelastische Polyurethanschaumstoffe, erhalten gemäß einem der Ansprüche 1 bis 5, **dadurch gekennzeichnet, dass** sie eine Stauchhärte im Bereich von 2,5 bis 4,0 kPa aufweisen.

7. Weichelastische Polyurethanschaumstoffe, erhalten gemäß einem der Ansprüche 1 bis 6, **dadurch gekennzeichnet, dass** sie eine Rohdichte von 35 bis 65 kg/m³ aufweisen.

## Revendications

1. Procédé de préparation de mousses de polyuréthane élastiques souples par mise en réaction de
A) polyisocyanates ou prépolymères de polyisocyanate avec
B) des polyétherpolyols
C) de l'eau
D) éventuellement, des agents gonflants
E) des activateurs, des stabilisateurs ainsi que d'autres additifs connus,
**caractérisé en ce qu'**on utilise comme polyétherpolyol B
i) au moins un polyétherpolyol de fonctionnalité 2,5 à 6,0 avec une part de propylèneoxyde d'au moins 75% en poids dans la chaîne EO/PO,
ii) au moins un polyétherpolyol de fonctionnalité 1,8 à 2,3 avec une part de propylèneoxyde d'au moins 75% en poids dans la chaîne EO/PO;
iii) au moins un polyétherpolyol de fonctionnalité 1,8 à 6,0 avec un taux d'éthylèneoxyde d'au moins 50% en poids, de préférence 60 à 90% dans la chaîne polyéther;
en utilisant
i) dans des quantités d'au moins 15%,
ii) dans des quantités de 30 à 80%,
iii) dans des quantités de 3 à 15% par rapport à 100% de composant polyol B.

2. Procédé selon la revendication 1, **caractérisé en ce qu'**on met en oeuvre
i) un polyétherpolyol de fonctionnalité 2,8 à 4,0 avec une part de propylèneoxyde d'au moins 75% en poids dans la chaîne EO/PO,
ii) un polyétherpolyol de fonctionnalité de 1,9 à 2,3 avec une part de propylèneoxyde d'au moins 75% en poids dans la chaîne EO/PO;
iii) un polyétherpolyol de fonctionnalité 2,5 à 3,5 avec un taux d'éthylèneoxyde de 60 à 90% dans la chaîne EO/PO;

3. Procédé selon l'une des revendications 1 à 2, **caractérisé en ce que** le toluylènediisocyanate est utilisé comme polyisocyanate.

4. Procédé selon l'une des revendications 1 à 3, **caractérisé en ce que** le polyisocyanate ou le prépolymère de polyisocyanate utilisé est du toluylènediisocyanate ou du diphénylméthanediisocyanate modifié éventuellement par des radicaux uréthane, urée, biuret, allophanate, carbodiimide ou uretdione, ou leurs prépolymères ainsi que leurs mélanges.

5. Procédé selon l'une des revendications 1 à 4, **caractérisé en ce que** le dioxyde de carbone liquide est utilisé comme agent gonflant.

6. Mousses de polyuréthane élastiques souples obtenues selon l'une des revendications 1 à 5, **caractérisées en ce qu'**elles présentent une dureté à la compression de l'ordre de 2,5 à 4,0 kPa.

7. Mousses de polyuréthane élastiques souples obtenues selon l'une des revendications 1 à 6, **caractérisées en ce qu'**elles présentent une densité brute de 35 à 65 kg/m³.

## Claims

1. Process for the production of flexible polyurethane foams by reacting
A) polyisocyanates or polyisocyanate prepolymers with
B) polyether polyols
C) water
D) optionally blowing agents
E) activators, stabilisers and other *per se* known additives,
**characterised in that** the polyether polyols B used are
i) at least one polyether polyol of a functionality of 2.5 to 6 having a propylene oxide content in the EO/PO chain of at least 75 wt.%
ii) at least one polyether polyol of a functionality of 1.8 to 2.3 having a propylene oxide content in the EO/PO chain of at least 75 wt.%
iii) at least one polyether polyol of a functionality of 1.8 to 6.0 having an ethylene oxide content in the polyether chain of at least 50%,
wherein
i) is used in quantities of at least 15%,
ii) is used in quantities of 30-80%,
iii) is used in quantities of 3-15%, relative to 100% of polyol component B.

2. Process according to claim 1, **characterised in that**
i) a polyether polyol of a functionality of 2.8 to 4.0 having a propylene oxide content in the EO/PO chain of at least 75 wt.%,
ii) a polyether polyol of a functionality of 1.9 to 2.3 having a propylene oxide content in the EO/PO chain of at least 75 wt.%,
iii) a polyether polyol of a functionality of 2.5 to 3.5 having an ethylene oxide content in the EO/PO chain of 60 to 90% is used.

3. Process according to claims 1 to 2, **characterised in that** tolylene diisocyanate is used as the polyisocyanate.

4. Process according to one of claims 1 to 3, **characterised in that** the polyiso- cyanates or polyisocyanate prepolymers used are tolylene diisocyanate or diphenylmethane diisocyanate or the prepolymers thereof and mixtures thereof optionally modified by urethane, urea, biuret, allophanate, carbodiimide or uretidione groups.

5. Process according to one of claims 1 to 4, **characterised in that** the liquid carbon dioxide is used as the blowing agent.

6. Flexible polyurethane foams obtained according to one of claims 1 to 5, **characterised in that** they have a compressive strength in the range from 2.5 to 4.0 kPa.

7. Flexible polyurethane foams obtained according to one of claims 1 to 6, **characterised in that** they have a bulk density of 35 to 65 kg/m³.
